# EUROPÄISCHE PATENTSCHRIFT

(11) **EP 4 186 159 B1**
(45) Veröffentlichungstag und Bekanntmachung des Hinweises auf die Patenterteilung: **05.06.2024**
(21) Anmeldenummer: 21724211.4
(22) Anmeldetag: 30.04.2021
(51) Int. Cl.: H02S 20/00

(54) **TRAGKONSTRUKTION ZUM TRAGEN VON SOLARMODULEN UND DECKENELEMENTEN**
SUPPORTING STRUCTURE FOR SUPPORTING SOLAR MODULES AND CEILING ELEMENTS
STRUCTURE DE SUPPORT DESTINÉE À SUPPORTER DES MODULES SOLAIRES ET DES ÉLÉMENTS DE PLAFOND

(30) Priorität: 23.07.2020 DE 102020004452
(43) Veröffentlichungstag der Anmeldung: 31.05.2023
(73) Patentinhaber: Richter, Michael, 45661 Recklinghausen (DE)
(72) Erfinder: Richter, Michael, 45661 Recklinghausen (DE)
(74) Vertreter: Kesselhut, Wolf
(86) Internationale Anmeldenummer: PCT/EP2021/061415
(87) Internationale Veröffentlichungsnummer: WO 2022/017656

(56) Entgegenhaltungen:
- WO-A1-93/22520
- DE-A1- 19 651 444
- DE-A1-102010 033 702
- US-A1- 2010 000 516

## Beschreibung

Die Erfindung betrifft eine Tragkonstruktion zum Tragen von Solarmodulen und Deckenelementen gemäß dem Oberbegriff von Anspruch 1.

Die Erzeugung elektrischer Energie aus Sonnenlicht mit Hilfe von photovoltaischen Solarmodulen in Solarparks beansprucht große Flächen, die nicht selten auch agrarwirtschaftlich oder anderweitig nutzbar sind oder bereits genutzt werden. Um solche Flächen für die Stromerzeugung mittels Solarmodulen zu erschließen, werden Tragkonstruktionen verwendet, auf denen die Module in einem Abstand über dem Boden angeordnet werden. Hierdurch wird der Vorteil einer doppelten Nutzung der Fläche erhalten, da der Bereich unterhalb der Solarmodule z.B. als Parkplatz, Ackerfläche oder als Lagerplatz für Gegenstände genutzt werden kann.

Aus der DE10 2010 033 702A1 ist ein Kollektorfeld bekannt, das eine Vielzahl von Solarmodulen umfasst, die auf einem Seiltragwerk angeordnet sind. Das Seiltragwerk besteht aus Masten, welche die auftretenden Kräfte in den Baugrund einleiten, sowie Tragseilen, die zwischen den Masten verspannt sind und das Gewicht der Solarmodule aufnehmen. Die Rahmen, an denen die Solarmodule aufgenommen sind, stützen sich dabei über Luftstützen auf den Tragseilen ab, die in der Aufwärtsrichtung über gegenläufig zu den Tragseilen verlaufende Vorspannseile fixiert werden. Dabei sind sowohl die Tragseile, als auch die gegenläufig zu diesen verlaufenden Vorspannseile fest mit den Masten und Luftstützen verbunden, um eine horizontale Bewegung der Luftstützen und der an deren oberen Enden aufgenommenen Solarmodule zu verhindern. Da die Luftstützen mit den daran angeordneten Solarmodulen aus der Ebene des Seiltragwerks in vertikaler Richtung hinausragen, ergibt sich eine höhere Belastungsanforderung an die Luftstützen, da durch externe Krafteinflüsse wie Wind oder Schnee, zusätzliche Biegemomente auf die Luftstützen ausgeübt werden.

Ein weiteres Problem des in der DE10 2010 033 702A1 beschriebenen Tragwerks ist darin zu sehen, dass der Aufwand zum Aufbau des Tragwerks aufgrund der fixen Befestigung der Luftstützen an den Trag- und Vorspannseilen vergleichsweise groß ist, und dass auch ein Nachspannen der Seile im Falle von Schneelasten oder temperaturbedingten Längenänderungen derselben nicht oder nur mit einem großen Zeitaufwand möglich ist, da hierzu die Spannung eines jeden Seiles einzeln verändert werden muss.

Demgemäß ist es eine Aufgabe der vorliegenden Erfindung, eine Tragkonstruktion zum Tragen von Überdachungen zu schaffen, die sich mit geringen Aufwand und in kurzer Zeit aufbauen lässt, und die ein einfaches Nachspannen der Seile zum Ausgleich von unterschiedlichen Dachlasten und temperaturbedingten Änderungen der Zugspannung in den Seilen ermöglicht.

Diese Aufgabe wird erfindungsgemäß durch eine Tragkonstruktion mit den Merkmalen von Anspruch 1 gelöst.

Gemäß der Erfindung kommen bei der Tragkonstruktion Tragwerke zum Einsatz, bei denen die auftretenden Lasten in einer Konstruktion aus Zugseilen und Druckstäben im Wesentlichen in Form von reinen Zug- und Drucklasten aufgenommen und abgeleitet werden. Insbesondere ist es beim Einsatz der erfindungsgemäßen Tragkonstruktion für Solaranlagen von Vorteil, wenn die Solarmodule, die nachfolgend auch als PV-Module bezeichnet werden, alle in einer definierten Himmelsrichtung ausgerichtet und in einem definiertem Winkel angeordnet sind. Die Voraussetzung dafür ist, dass die Unterkonstruktion eine Ebene bildet, welche üblicherweise planparallel zum Untergrund verläuft. Diese Anforderung wird durch die erfindungsgemäße Tragkonstruktion im Gegensatz zu solchen Seilkonstruktionen, die als Netze, Membranen oder Hängeleitem ausgebildet sind, bei denen die Ausrichtung der Panels durch die Art der Konstruktion vorgegeben ist, in vorteilhafter Weise unabhängig vom Ort der Aufstellung erfüllt.

Bei der erfindungsgemäßen Lösung wird im Gegensatz zu bekannten festen Dachkonstruktionen statt eines in irgendeiner Form gestalteten Trägers eine Seilkonstruktion eingesetzt, die im Folgenden als "Tragwerk" bezeichnet wird. Zwischen zwei Masten werden dabei mindestens vier Seile verspannt: Ein (oder mehrere) Tragseile, ein (oder mehrere) Vorspannseile, sowie mindestens ein oberes und ein unteres Positionierseil. Zusammen mit mindestens einem vertikalen Druckstab bilden die Seile ein einzelnes Tragwerk. Die durch die Solarmodule oder auch Deckenelemente erzeugte senkrechte Last, die auf die jeweiligen Druckstäben wirkt, wird erfindungsgemäß über einen gegenüber dem Tragseil in horizontaler Richtung beweglichen, d.h. nicht positionsfesten Auflagerpunkt in das Tragseil eingeleitet und von diesem über seine Aufhängepunkte in den Mast weitergeleitet. Die Auflagerpunkte liegen hierbei im Falle einer auf die Druckstäbe gleichmäßig verteilten Last und unter Vernachlässigung des Eigengewichtes des Tragseils physikalisch bedingt (Minimierung der potentiellen Energie des Systems) auf einer Linie, die im Wesentlichen einer nach oben geöffneten Parabel (quadratische Parabel, y = a x²) entspricht. Das Gleiche gilt umgekehrt für das einem jeden Tragseil zugeordnete Vorspannseil, das vereinfacht ausgedrückt spiegelbildlich oberhalb eines jeden Tragseils angeordnet ist und das im Wesentlichen die Form einer nach unten geöffneten Parabel (y = -a x²) beschreibt. Das Vorspannseil übernimmt dabei keine tragende Funktion, sondern verhindert lediglich, dass die Tragkonstruktion unter äußerer Anregung, z.B. durch Wind und/oder ein manuelles Aufschaukeln, z.B. im Falle von Erschütterungen des Bodens, in Schwingungen gerät, die ohne Vorspannseil z.B. zu einem Wippen oder Springen der Druckstäbe auf dem Tragseil führen können.

Ein weiterer Vorteil des Einsatzes von Vorspannseilen in Verbindung mit Tragseilen, die in horizontaler Richtung beweglich an den Druckstäben aufgenommen sind, ist darin zu sehen, dass die Vorspannkraft im Vorspannseil auf einfache Weise an einer zentralen Stelle verändert werden kann, z.B. automatisiert durch einen motorisch betätigten Aktuator, oder einen Federspanner mit veränderbarer Vorspannung, bzw. ein über eine Rolle geführtes Gewicht, welches durch ein Zusatzgewicht ergänzt werden kann, um die Zugspannung im Vorspannseil zu verändern. Hierdurch eröffnet sich die Möglichkeit, die Vorspannung, die durch das Vorspannseil über die Druckstäbe auf das zugehörige Tragseil ausgeübt wird, im Falle einer erhöhten Dachlast, z.B. bei Schneefall, aktiv zu reduzieren, um einem Durchhängen der gesamten Konstruktion entgegen zu wirken. Ebenso eröffnet sich die Möglichkeit, im Tragwerk auftretende Schwingungen, die z.B. durch Windsogkräfte oder Erschütterungen angeregt werden, aktiv zu dämpfen, indem die Spannung in den Vorspannseilen beim Überschreiten einer vorgegebenen Amplitude durch einen Schwingungsdämpfer oder gar aktiv durch einen motorisch betätigten Aktuator verändert wird.

Gemäß der Erfindung sind die Druckstäbe mit den Tragseilen und/oder Vorspannseilen über Seilrollen oder Gleitelemente gekoppelt. Hierdurch wird erreicht, dass die Anzahl der benötigten Einzelteile reduziert wird und diese als Gleichteile gefertigt werden können. Dies lässt sich daran verdeutlichen, dass die Anzahl der benötigten Trag- und Vorspannseile aufgrund der bevorzugten Verwendung von Seilrollen oder Gleitelementen an den Druckstäben in Verbindung mit Doppelseilen für jedes Tragwerk genau vier beträgt. Würden diese Seile in mehrere Seilabschnitte unterteilt, die sich jeweils von einem Mast zu einem Druckstab und weiter von diesem Druckstab zum nächsten Druckstab und von diesem aus weiter bis zu einem gegenüberliegenden Mast erstrecken, so würde ein Tragwerk, welches lediglich zwei Masten und vier Druckstäbe umfasst, allein für die Trag- und Vorspannfunktion bereits aus 20 Einzelseilen bestehen.

Dazu ergibt sich in vorteilhafter Weise folgender Effekt: Da die Positionierung der Druckstäbe über die Positionierseile gewährleistet ist, wird das Tragwerk beim Spannen der Tragseile nicht verzerrt, und die einmal eingestellten Abstände der Druckstäbe im Tragwerk bleiben erhalten. Außerdem sind die Auflager, wenn sie als Rollen ausgeführt werden, alle baugleich. Demgegenüber muss bei bekannten Hängeseilkonstruktionen, wie zum Beispiel Hängebrücken, jeder Abhängepunkt an den jeweiligen Winkel des Tragseils gegenüber der Senkrechten angepasst werden.

Die Verwendung von Seilrollen vereinfacht somit die Montage der Tragwerke und führt zu geringeren Kosten aufgrund der verringerten Komplexität der Teile.

Im Gegensatz zu den entlang der Trag- und Vorspannseile beweglichen Auflagerpunkten der Druckstäbe sind die Positionierseile erfindungsgemäß fest, aber bevorzugt winkelverstellbar, bzw. winkelveränderlich an den Druckstäben befestigt, so dass eine Auf- und Abwärtsbewegung der Druckstäbe mit den an diesen befestigten Solarmodulen möglich ist, nicht aber eine Längsverschiebbarkeit in Richtung entlang eines Positionierseils. Wie von der Anmelderin erkannt wurde, wird durch die in horizontaler Richtung positionsfest mit den Druckstäben verbunden Positionierungsseile verhindert, dass die Druckstäbe aus ihrer vertikalen Lage herauskippen. Hierzu sind die Druckstäbe so mit den horizontal verlaufenden Positionierseilen z.B. über Gewindespanner und Schäkel verbunden, dass sie nach dem Einstellen der Gewindespanner nicht, bzw. nur in sehr geringem Umfang durch eine Überdehnung des gespannten Positionierseils infolge einer äußeren Krafteinwirkung in horizontaler Richtung verschoben werden können.

Da jeder Druckstab über die Positionierseile fixiert ist, kann die seitliche Ausweichkraft, die durch die Ausführung des Auflagerpunktes als Seilrolle oder Gleitelement zwangsläufig entsteht, in vorteilhafter Weise ohne zusätzliche Bauelemente aufgefangen werden. Die Ausweichkraft des Druckstabs wird dabei umso geringer, je flacher die Parabel des Tragseils ausfällt. Lediglich in dem Fall, dass im Tragwerk eine ungerade Zahl an Druckstäben verbaut ist, ist der mittlere Druckstab frei von dieser Ausweichkraft. Alle anderen Druckstäbe streben durch die "schräge" Auflagerung auf dem Tragseil in diese Mittelposition.

Die Solarmodule und ggf. auch Deckenelemente werden beim Einsatz der erfindungsgemäßen Tragkonstruktion als Unterkonstruktion für eine Photovoltaikanlage erfindungsgemäß an den oberen Enden der Druckstäbe befestigt, wodurch sich der Vorteil ergibt, dass die Solarmodule in der oberen Ebene des Gesamtaufbaus liegen und keine Verschattungen durch nach oben in vertikaler Richtung durch herausragende Teile der Druckstäbe entstehen, welche aufgrund des damit einhergehenden erhöhten elektrischen Widerstandes in einem beschatteten PV-Modul und der elektrischen Reihenschaltung von PV-Modulen bekanntermaßen zu einer nachteiligen Verringerung der von diesen erzeugten elektrischen Leistung führen.

Bei der bevorzugten Ausführungsform der Erfindung werden die Druckstäbe zusätzlich zu den Positionierseilen, die im Tragwerk parallel zu den Trag- und Vorspannseilen, d.h. in Längsrichtung der Tragwerke, verbaut sind, im Bereich ihrer oberen Enden und unteren Enden zusätzlich durch quer zur Richtung des Tragwerkes verlaufende laterale Positionierseile in ihrer Position fixiert. Diese sind ebenfalls positionsfest, aber bevorzugt längenveränderlich mit den Druckstäben verbunden, um ein seitliches Abkippen der Druckstäbe zu verhindern. Anstelle von lateralen Positionierseilen können alternativ oder gleichzeitig jedoch auch Distanzstäbe eingesetzt werden.

Nach einem weiteren der Erfindung zugrunde liegenden Gedanken umfasst die erfindungsgemäße Tragkonstruktion bevorzugt zwei oder mehr der zuvor beschriebenen Tragwerke, die bevorzugter Weise parallel zueinander angeordnet sind. Die Positionierung der Druckstäbe quer zum Tragwerk erfolgt hierbei bevorzugter Weise über einen Kreuzverband und zwei Distanzstangen.

Zudem können mehrere Tragwerke aufeinander folgend entlang einer Reihe angeordnet werden, die im Wesentlichen die Länge der von der Tragkonstruktion überspannten Grundfläche besitzt. Entscheidend ist es hierbei, dass sich die horizontalen Kraftkomponenten des einen Tragwerks mit den Kraftkomponenten des folgenden Tragwerks bei den innenliegenden Tragwerken aufheben. Demgegenüber werden die Kraftkomponenten bei den außenliegenden Tragwerken der Tragkonstruktion bevorzugt über im Boden verankerte Abspannseile kompensiert, die mit den außenliegenden Masten des Tragwerks verbunden sind, und diese mit einer in horizontaler Richtung wirkenden Zugkraftkomponente beaufschlagen. Dies ermöglicht in vorteilhafter Weise eine Aneinanderreihung von beliebig vielen Tragwerken, wobei die inneren Masten aufgrund des Ausgleichs der auf diese wirkenden Momente der angrenzenden Tragwerke konstruktiv besonders einfach ausgeführt sein können.

Die Tragwerke, die die Masten untereinander verbinden, werden im Weiteren als Haupttragwerke bezeichnet. Um eine flächige Anordnung der erfindungsmäßigen Konstruktion zu ermöglichen werden quer zu den Haupttragwerken weitere Tragwerke angefügt, die nicht über Masten zum Boden hin abgestützt sind, sondern die Druckstäbe der parallelen Haupttragwerke fliegend miteinander verbinden. Diese werden nachfolgend als Nebentragwerke bezeichnet. Die Gesamtheit der Druckstäbe bildet bei einer erfindungsgemäßen Tragkonstruktion aus Haupt- und Nebentragwerkten somit ein Raster, das erheblich feiner ist als das der Masten. Stehen die Masten beispielsweise in beiden Richtungen 30 Meter auseinander und sind in jedem Haupttragwerk fünf Druckstäbe angeordnet, so entsteht ein Raster aus Aufhängungspunkten, die 6 x 6 = 36 Felder von jeweils 5 x 5 m Größe bilden.

An den äußeren Mündungspunkten sowohl der Haupt- als auch der Nebentragwerke können die horizontalen Kräfte von geeigneten Randmasten aufgenommen werden, da der oben geschilderte Momentenausgleich am Rand der Konstruktion nicht stattfinden kann. Da die Randmasten aus diesem Grund eine aufwendigere verstärkte Konstruktion der Masten mit einem verstärkten Fundament erfordern als die Innenmasten, ist es von Vorteil, so viele Tragwerke wie möglich aneinander zu reihen. Wie vom Anmelder erkannt wurde, fallen die relativen Baukosten pro Bauabschnitt umso geringer aus, je mehr Tragwerke aufeinander folgen.

Die Solarmodule sind in gleicher Weise wie die gleichzeitig oder alternativ einsetzbaren Deckenelemente, die bevorzugt dieselben Abmessungen wie die Solarmodule besitzen, erfindungsgemäß auf Rahmen angeordnet, die bevorzugt an den oberen Enden der Druckstäbe befestigt werden. Durch Aneinanderreihen der Tragwerke in beiden Richtungen können dadurch beliebig große Flächen überbaut werden.

Ein weiterer Vorteil der erfindungsgemäßen Tragkonstruktion besteht darin, dass diese aus wenigen einfachen Bauteilen aufgebaut ist, die vor Ort mit geringstmöglichem Aufwand montiert werden können. Weiterhin besitzt die erfindungsgemäße Tragkonstruktion den Vorteil, dass diese langlebig und wartungsfreundlich ist, da die Tragseile und Vorspannseile aufgrund der nicht positionsfesten Aufnahme an den Druckstäben über eine einzige Spannvorrichtung nachgespannt werden können, ohne eine Vielzahl von Einzelspanneinrichtungen nacheinander zu betätigen und nachjustieren sowie warten zu müssen, wie dies bei einer positionsfesten Fixierung der Druckstäbe an den Trag- bzw. Vorspannseilen der Fall ist.

Obgleich es denkbar ist, die Druckstäbe als Doppeldruckstäbe auszuführen, zwischen denen die Einzelseile mittig geführt werden, bestehen die Druckstäbe bei der bevorzugten Ausführungsform der Erfindung in vorteilhafter Weise aus einzelnen Rohren, an denen die Trag- und Vorspannseile über Seilrollen oder Gleitelemente aufgenommen sind, welche in diesem Falle zur Vermeidung eines Kippmoments bevorzugt als parallel geführte Doppelseile ausgelegt sind. Dies eröffnet die Möglichkeit einer besonders einfachen mechanischen Konstruktion der Auflager an den Druckstäben, bei der die Seilrollen zur Aufnahme der Trag- und Vorspannseile an den Druckstäben in mechanisch besonders einfacher Weise mittels einer Schraube am jeweiligen Druckstab befestigt werden, die in eine in den Druckstab eingebrachte Bohrung eingeschraubt sein kann.

Die zuletzt beschriebene Ausführungsform mit Doppelseilen bietet die Möglichkeit, dass eines der beiden Tragseile auch im Betrieb, z.B. an einem windstillen Tag, getauscht werden kann, z.B. dann, wenn eines der Trag- oder Vorspannseile durch Korrosion oder eine mechanische Einwirkung beschädigt wurde, da die Auslegungslast der Tragseile bei derartigen Tragwerken in der Regel weitaus größer ist als das tatsächliche Eigengewicht der Konstruktion. So sind die Tragseile bevorzugt so bemessen, dass bei günstigen Bedingungen (kein Schnee, wenig Wind) ein einzelnes Tragseil die Konstruktion problemlos allein tragen kann und das zusätzlich eingesetzte Tragseil lediglich zur redundanten Absicherung dient, bzw. die Möglichkeit eröffnet, das ein Tragseil während des laufenden Betriebs zu tauschen.

Weiterhin kann es bei einer Errichtung der erfindungsgemäßen Tragkonstruktionen, in einer Hanglage von Vorteil sein, wenn auch die Positionierseile als Parallelseile seitlich an den Druckstäben befestigt werden. Dadurch ergibt sich der Vorteil, dass die Positionierseile ebenfalls einen Teil der statischen Last aufnehmen, wodurch die Konstruktion insgesamt kleiner dimensioniert werden kann.

Nach einem weiteren der Erfindung zugrunde liegenden Gedanken bilden die PV-Panels die obere Ebene der Tragkonstruktion, um eine Selbstverschattung der Anlage zu vermeiden. Wie von der Anmelderin erkannt wurde wäre es unwirtschaftlich, die Tragwerke so dicht aneinander zu errichten, dass die PV-Panels (gegenwärtige Standardgröße im Jahre 2020 ca. 1,0m x 1,6m) direkt zwischen die Spitzen von jeweils vier aneinandergrenzenden Druckstäben montiert werden. Erfindungsgemäß werden daher bevorzugt mehrere PV-Panels auf einem Hilfsrahmen, insbesondere aus gekanteten Blechen oder zusammengefügten Profilen, montiert und dann gemeinsam und von unten in das jeweilige Feld in der Konstruktion eingehängt. Bei einer bevorzugten Ausführungsform der Erfindung lassen sich dadurch auf einem solchen Hilfsrahmen von beispielsweise ca. 5 m x 5 m insgesamt 15 Solarmodule und/oder Deckenelemente anordnen, wobei die Deckenelemente z.B. aus Glas bestehen können, um Sonnenlicht in den unterhalb des Tragwerks liegenden überspannten Raumbereich einzuleiten, z.B. wenn das Tragwerk über einer landwirtschaftlich bewirtschafteten Fläche errichtet wird.

Da jeder Hilfsrahmen aus Gründen der Statik eine gewisse Bauhöhe aufweisen muss, kann dieser nach einem weiteren Gedanken der Erfindung mit entsprechenden Befestigungsmitteln wie Ösen oder Haken versehen sein, welche über Ketten oder Seile oder sonstige gelenkige Verbindungselemente mit den oberen Enden der Druckstäbe gelenkig gekoppelt werden, welche hierzu bevorzugt ebenfalls entsprechende Befestigungsmittel, insbesondere Ösen oder Haken aufweisen. Als Sicherung gegen eine Anregung durch Wind kann in den gleichen Befestigungspunkten am Hilfsrahmen eine Gegenabspannung nach unten erfolgen. Diese Ausführungsform ermöglicht in vorteilhafter Weise auch bei großen Anlagen eine kostengünstige Montage der PV-Panels, da die Rahmen mit den darauf montierten Solarmodulen über entsprechende Seilrollen vom Boden aus in ihre Endposition oberhalb der Vorspannseile angehoben und an den Enden der Druckstäbe über die zuvor erwähnten Ketten oder entsprechende Halteseile oder sonstige Gelenkverbindungen befestigt werden können. Hierdurch ergibt sich der Vorteil, dass die Rahmen in effizienter Weise am Boden mit den Modulen bestückt werden können und auf den Einsatz eines Autokrans verzichtet werden kann, was die Kosten für den Aufbau des erfindungsgemäßen Tragwerks noch einmal deutlich verringert.

Nach einem weiteren der Erfindung zugrunde liegenden Gedanken werden die Masten im Inneren eines Baufeldes möglichst einfach und kostengünstig gestaltet, um den Mehraufwand, den die Randmasten mit sich bringen, zu kompensieren. Dies ist möglich, da sich die horizontalen Zugkräfte an den Innenmasten im Wesentlichen gegenseitig aufheben. Durch eine Konstruktion der Innenmasten in der Weise, dass nur die vertikale Last (Gewichtskraft) senkrecht abgeführt wird, können die Innenmasten frei von Biegemomenten gehalten werden. Wie von der Anmelderin erkannt wurde, lässt sich die Konstruktion der Masten, und vor allem die der zugehörigen Fundamente, dadurch in vorteilhafter Weise wesentlich vereinfachen, wobei der Vorteil umso größer ist, je mehr Tragwerke hintereinander gereiht werden. Werden in jeder Richtung z.B. fünf Tragwerke gereiht, so befinden sich 16 Innenmasten bei vier Eckmasten und 16 Randmasten im Baufeld. Werden demgegenüber zehn Tragwerke gereiht, so weist das Baufeld bereits 81 Innenmasten bei vier Eckmasten und 36 Randmasten auf.

In einer bevorzugten Ausführungsform der vorliegenden Erfindung ist es dementsprechend vorgesehen, dass die Seile bei den innenliegenden Masten nicht direkt am Mast sondern an einer geeigneten Konstruktion befestigt werden, die sich in Form einer schwimmenden Lagerung in der Horizontalen frei um den Mast bewegen kann; in der Vertikalen aber die Gewichtskraft nach unten und eventuelle Sogwirkungen des Windes nach oben auf den Mast überträgt. Dadurch wird in vorteilhafter Weise erreicht, dass auf den Mast keine Biegemomente wirken und gleichzeitig das Tragwerk in vertikaler Richtung befestigt wird.

Die Erfindung wird nachfolgend mit Bezug auf die Zeichnungen anhand bevorzugter Ausführungsformen beschrieben.

In den Zeichnungen zeigen:
- Fig. 1: eine schematische Darstellung eines beispielhaften einzelnen Tragwerks mit einem Druckstab,
- Fig. 2: eine schematische Darstellung eines Tragwerks mit mehreren Druckstäben,
- Fig. 3: eine schematische Darstellung einer erfindungsgemäßen Tragkonstruktion aus zwei parallelen Tragwerken, die über Distanzstangen gekoppelt sind,
- Fig. 4: eine schematische Darstellung einer erfindungsgemäßen Tragkonstruktion bestehend aus einer Vielzahl von in zwei parallelen Reihen angeordneten Tragwerken,
- Fig. 5: schematische Darstellung eines Hilfsrahmens mit Solarmodulen,
- Fig. 6: eine schematische seitliche Teilansicht eines Tragwerks mit daran befestigten Hilfsrahmen,

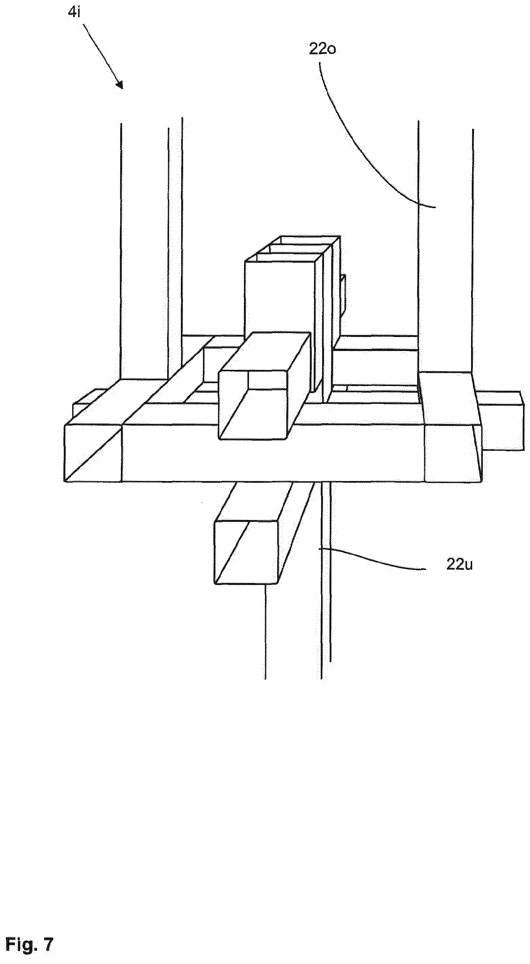

- Fig. 7: eine schematische Darstellung eines innenliegenden Tragmastens,
- Fig. 8: eine schematische Übersichtsdarstellung einer erfindungsgemäßen Tragkonstruktion mit 16 Tragmasten und 10 Reihen von jeweils drei hintereinander angeordneten Tragwerken ohne Solarmodule, und
- Fig. 9: die Tragkonstruktion von Fig. 8 mit eingezeichneten Solarmodulen.

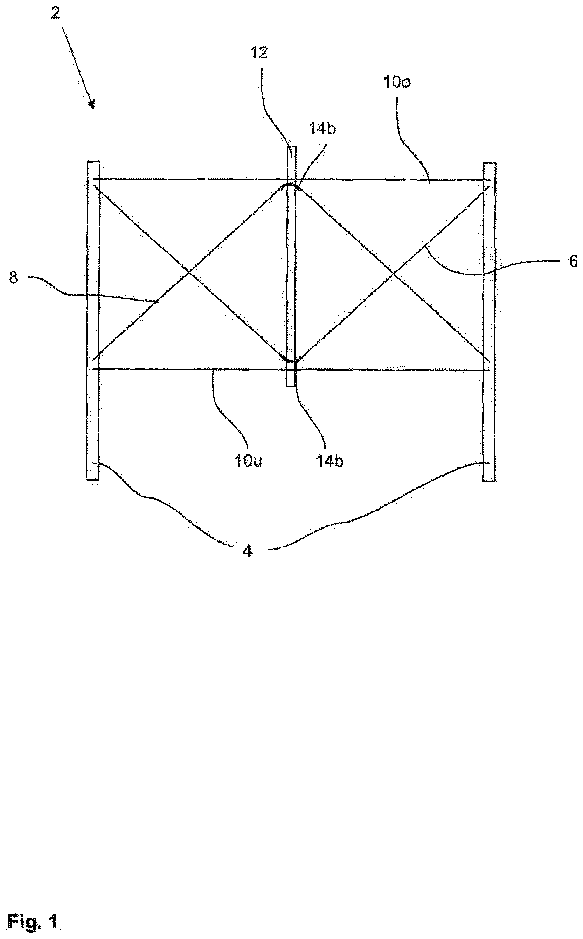

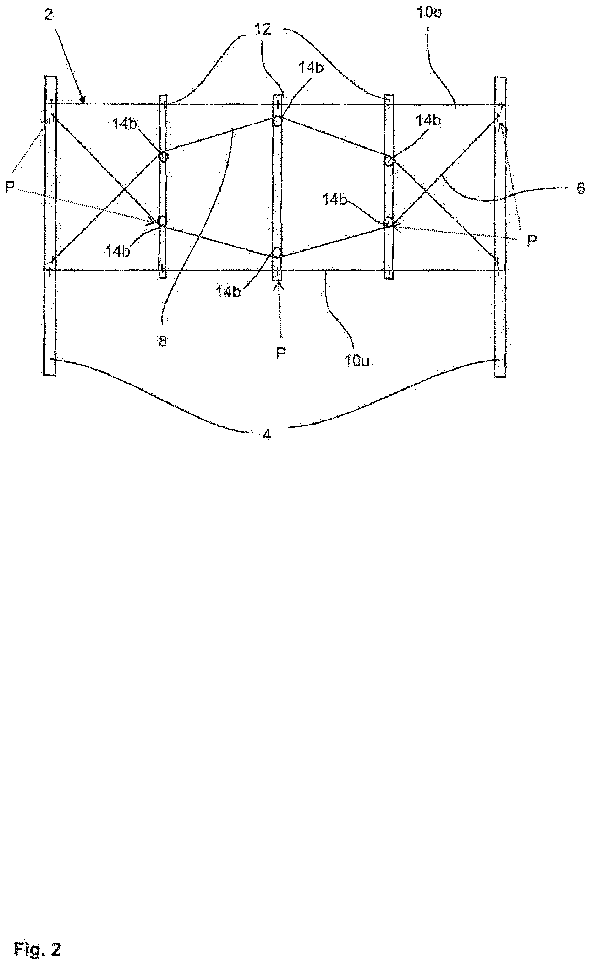

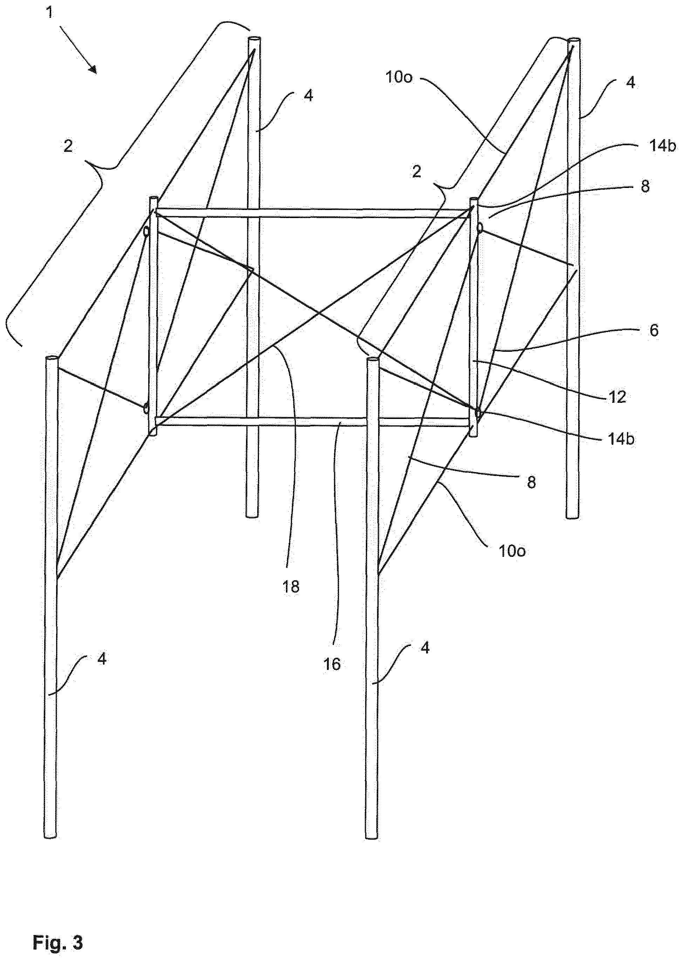

Wie den Darstellungen der Figuren 3, 4 sowie 8 und 9 entnommen werden kann, umfasst eine erfindungsgemäße Tragkonstruktion 1 zum Tragen einer Vielzahl von Solarmodulen oder Deckenelementen 32 mindestens zwei Tragwerke 2. Jedes Tragwerk 2 besitzt zwei Tragmasten 4, die jeweils über ein Tragseil 6 miteinander verbunden sind, welches von der Seite aus betrachte im Wesentlichen die Form einer Parabel besitzt. An dem Tragseil 6 stützen sich die Solarmodule oder auch Deckenelemente 32 über vertikale Druckstäbe 12 ab, die mit dem Tragseil 6 über Befestigungselemente 14 verbunden sind, auf die nachfolgend noch näher eingegangen wird. Wie der Darstellung von Fig. 1 und 2 hierbei im Detail entnommen werden kann, werden die Druckstäbe 12 über wenigstens ein Vorspannseil 8, welches eine komplementär zur Form der Parabel des Tragseils 6 verlaufende Form aufweist, mit einer Vorspannkraft beaufschlagt, die die Druckstäbe 12 in Abwärtsrichtung auf das mit diesen verbundene Tragseil 6 zu drängt, auf welchem sich die Druckstäbe 12 abstützen.

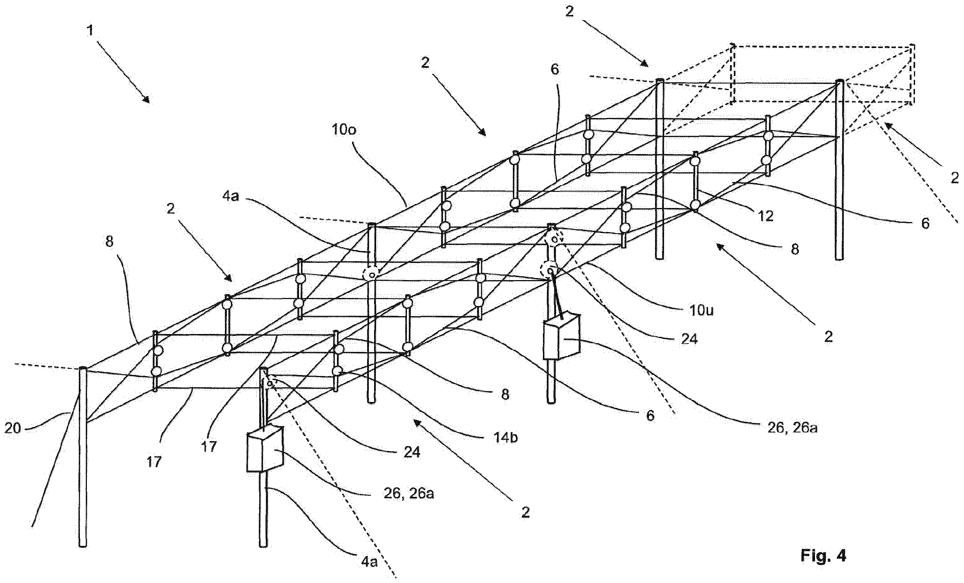

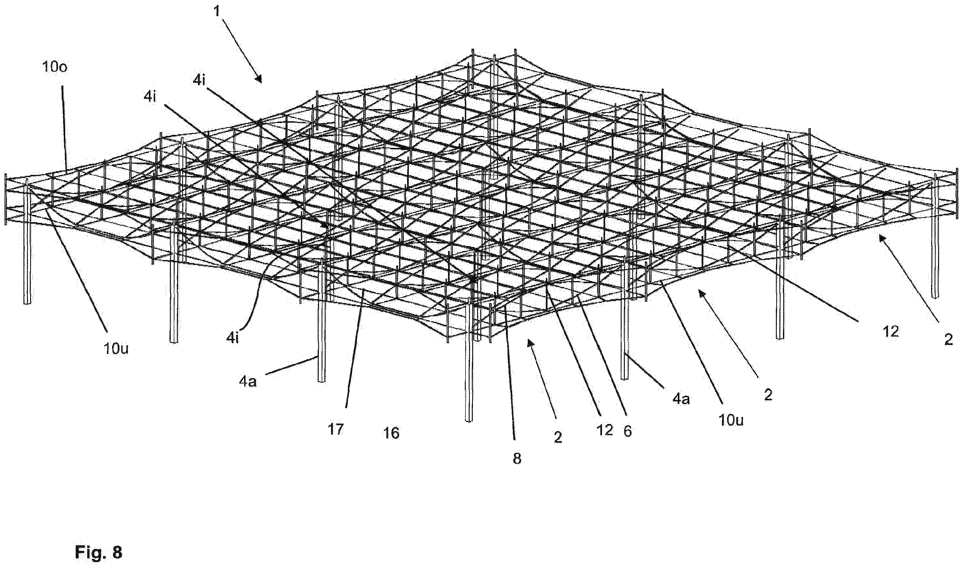

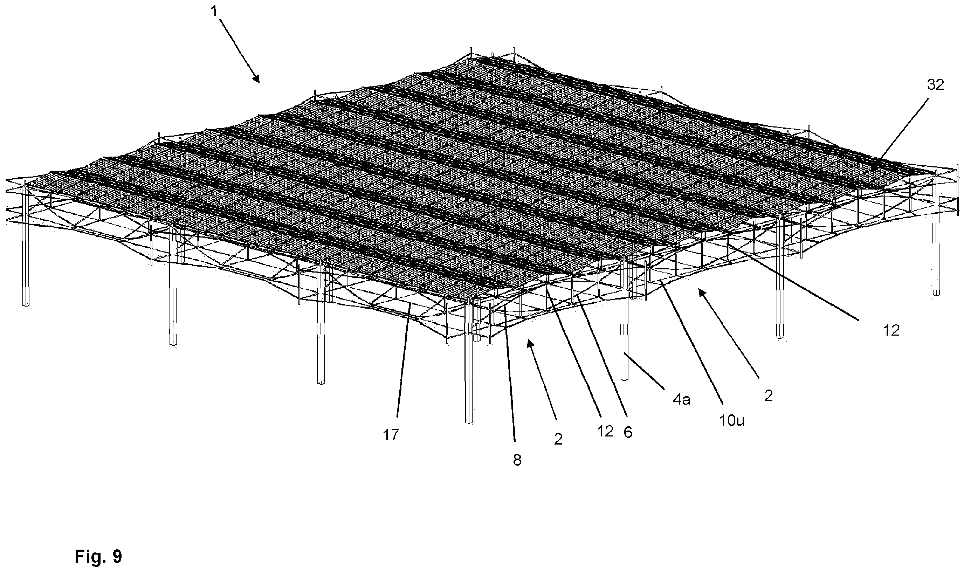

Die Tragkonstruktion 1 zeichnet sich dadurch aus, dass die Befestigungselemente Seilrollen 14a oder Gleitelemente 14b sind, oder solche umfassen, über die die Druckstäbe 12 verschieblich am zugehörigen Tragseil 6 und bevorzugt auch am Vorspannseil 8 aufgenommen sind. Die Seilrollen 14a sind in Fig. 2 und 4 und die Gleitelemente in Fig. 1 und 3 schematisch angedeutet und in den Figuren 8 und 9 der Übersichtlichkeit halber nicht mit eingezeichnet. Zur Vermeidung einer Bewegung der Druckstäbe 12 in der horizontalen, bzw. bei geneigten Dachflächen seitlichen Richtung, sind diese über Positionierseile 10 unverschieblich mit den Tragmasten 4 verbunden.

Wie bei der in Fig. 1 gezeigten Ausführungsform eines erfindungsgemäßen Tragwerks 2 angedeutet ist, können die Gleitelemente nachfolgend als Gleitschuhe 14b bezeichnete bogenförmige Führungen umfassen, die am jeweiligen Druckstab 12 befestigt sind, und die beispielsweise eine nicht näher gezeigte Gleitfläche aufweisen, die aus einem oder auch zwei übereinander liegenden Kunststoffelementen besteht, über welches/welche die Seile 6, 8 geführt sind. Die bogenförmigen Gleitflächen besitzen bevorzugt einen U-förmigen Querschnitt und umschließen die zugehörigen Trag- und Vorspannseile 6, 8 an den Seiten, so dass diese bei gespannten Seilen nicht seitlich von den Gleitflächen rutschen können. Alternativ können die Gleitelemente im einfachsten Falle auch als an den Druckstäben 12 befestigte Ösen ausgeführt sein, wie dies in Fig. 3 beispielhaft angedeutet ist.

Bei der bevorzugten Ausführungsform der Erfindung, sind die Befestigungselemente 14 an den Druckstäben 12 in unterschiedlichen Höhen positionierbar, wobei die Befestigungsposition eines Befestigungselements 14 an einem Druckstab 12 in Abhängigkeit von seiner Lage relativ zu einem Tragmasten 4 entsprechend der zuvor berechneten Form der Parabellinie so gewählt wird, dass die Unterseiten und/oder bei gleich langen Druckstäben 12 die Oberseiten derselben nach dem Spannen der Tragseile 6 und Vorspannseile 8 im Wesentlichen auf einer Höhe liegen.

Hierdurch ergibt sich der Vorteil, dass ein erfindungsgemäßes Tragwerk 2 in sehr kurzer Zeit errichtet werden kann, indem ein Tragseil 6 und ein zugehöriges Vorspannseil 8 mit den Druckstäben 12 am Boden ausgelegt, die Druckstäbe 12 über die Befestigungselemente 14 mit den Seilen 6, 8 gekoppelt, das ganze Gebilde aufgerichtet und mit den benachbarten Tragwerken verbunden, bzw. mit einer Hilfsverspannung in der Horizontalen gesichert wird. Im Anschluss daran werden die Seile 6, 8 bevorzugt abwechselnd solange gespannt werden, bis die gewünschte Spannung im Tragseil 6 erreicht ist und die unten Enden der Druckstäbe 12 entlang einer Linie ausgerichtet sind.

Ebenso kann es vorgesehen sein, dass die Druckstäbe 12 in ihrer Länge veränderbar sind, z.B. nach Art von teleskopierbaren Stützen, wodurch sich der Vorteil ergibt, dass die gesamte Fläche, welche von den Solarmodulen oder Deckenelementen 32 aufgespannt wird, mit einer Neigung versehen werden kann, die in Abhängigkeit von der Neigung des Untergrundes einen möglichst maximalen Ertrag der Solarmodule 32 ergibt. Hierzu sind die herausziehbaren Teile der Druckstäbe 12 im Bereich des hochgelegenen Teils im Randbereich der Fläche bevorzugt vollständig aus dem zwischen dem Trag- und Vorspannseil 6, 8 verbleibenden stationären Teil des Druckstabs 12 herausgezogen, wohingegen die herausziehbaren Teile der Druckstäbe 12 im Bereich des niedrig gelegenen Teils der von den Solarmodulen 32 aufgespannten Fläche bevorzugt vollständig in die stationären Teile der Druckstäbe 12 eingeschoben sind. Die Erfindung besitzt den Vorteil, dass die optimale Neigung der von den Solarmodulen 32 aufgespannten Fläche durch ein entsprechendes Herausfahren der beweglichen oberen Teile der Druckstäbe 12, an denen die Solarmodule 32 aufgenommen sind, bereits vor der Montage der Module, bzw. Hilfsrahmen nach der Errichtung des Tragwerks 1 vorgenommen werden kann, was den Arbeitsaufwand beachtlich verringert.

Weiterhin kann es vorgesehen sein, dass die die Vorspannseile 8 und/oder die Tragseile 6 gemäß einer in den Figuren nicht näher gezeigten Ausführungsform der Erfindung jeweils zwei oder mehr, insbesondere über Schäkel miteinander verbundene Seilabschnitte umfassen. Hierdurch wird der Vorteil erhalten, dass Seilabschnitte, die z.B. im Laufe der Zeit durch Korrosion beschädigt sind, problemlos abschnittsweise ausgetauscht werden können. Hierbei können die Seilabschnitte auch durch bekannte mechanische Seilspannvorrichtungen, wie z.B. Schraubspanner, miteinander verbunden werden, die in den Zeichnungen der Übersichtlichkeit halber nicht gezeigt sind.

Die Tragseile 6 und bevorzugt auch die Vorspannseile 8 sind in vorteilhafter Weise Mehrfachseile, insbesondere Doppelseile, die jeweils zwei oder mehr parallel zueinander verlaufende Einzelseile umfassen, wodurch sich diese, wie bereits zuvor erwähnt, mit geringstem Aufwand während des laufenden Betriebes der Tragkonstruktion 1 austauschen lassen.

Wie weiterhin in den Figuren 3 und 4 angedeutet ist, verlaufen die Tragseile 6 zweier Tragwerke 2 in Längsrichtung der Tragkonstruktion 1 betrachtet parallel zueinander. Bei einer ersten, in Fig. 4 gezeigten Ausführungsform der Erfindung werden die Druckstäbe 12 zweier benachbarter Tragwerke 2 hierzu in Querrichtung der Tragkonstruktion 1 betrachtet über laterale Distanzstangen 16 (Fig. 3) in einem festen Abstand zueinander angeordnet und durch Querseile 18 miteinander verspannt. Gleichzeitig oder alternativ besteht die Möglichkeit, die parallel zueinander verlaufenden Tragwerke 2 über laterale Positionierseile 17 miteinander zu verbinden, wobei die Zugspannungen in Längs- und in Querrichtung, wie in Fig. 8 und 9 gezeigt über die außenliegende Randmasten 4 aufgenommen werden. Zusätzlich können die Zugspannungen über in den Figuren nicht näher gezeigte Abspannseile in den Boden eingeleitet werden.

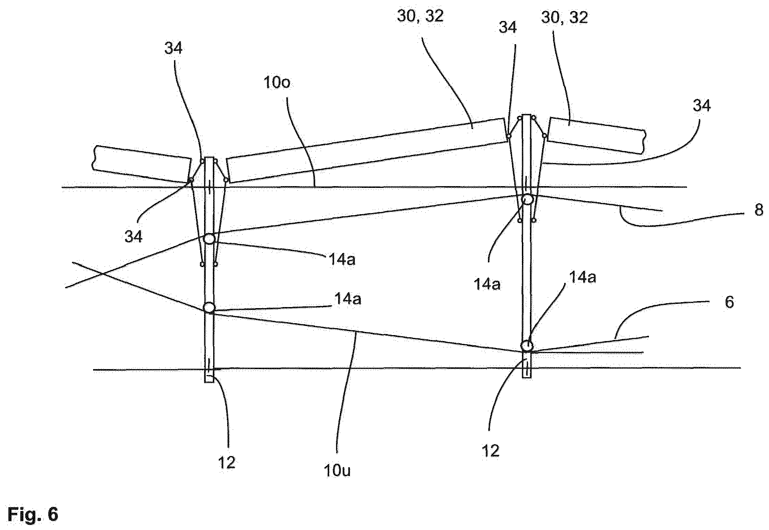

Wie weiterhin in Fig. 6 gezeigt ist, können bei einer in Fig. 8 und 9 gezeigten erfindungsgemäßen Tragkonstruktion 1, die eine Vielzahl von Tragwerken 2 umfasst, die innenliegenden Tragmasten 4i der Vielzahl von Tragwerken 2 einen ersten unteren Mastteil 22u und einen zweiten oberen Mastteil 22o aufweisen, wobei der zweite obere Mastteil 22o mit seiner Unterseite in horizontaler Richtung beweglich schwimmend am oberen Ende des ersten unteren Mastteils 22u aufgenommen ist.

Wie ferner in der Darstellung von Fig. 4 durch die zwischen den beiden Vorspannseilen 8 des vorderen und hinteren rechten Tragwerks 2 in strichpunktierten Linien dargestellte Umlenkrolle und den mit dieser gekoppelten Aktuator bzw. das schematisiert gezeigte Gewicht angedeutet ist, können die Tragseile 6 und/oder Vorspannseile 8 zweier benachbarter Tragwerke 2 als ein zusammenhängendes Tragseil 6 oder Vorspannseil 8 ausgeführt sein, welches zwischen den Tragwerken 2 über eine gemeinsame Seilrolle 24 geführt ist, die zur Veränderung der Zugspannung über Spannmittel, wie z.B. ein Spanngewicht 26 und/oder einen motorisch betätigten Aktuator 26a mit einer gewünschten, einstellbaren Vorspannkraft beaufschlagbar ist.

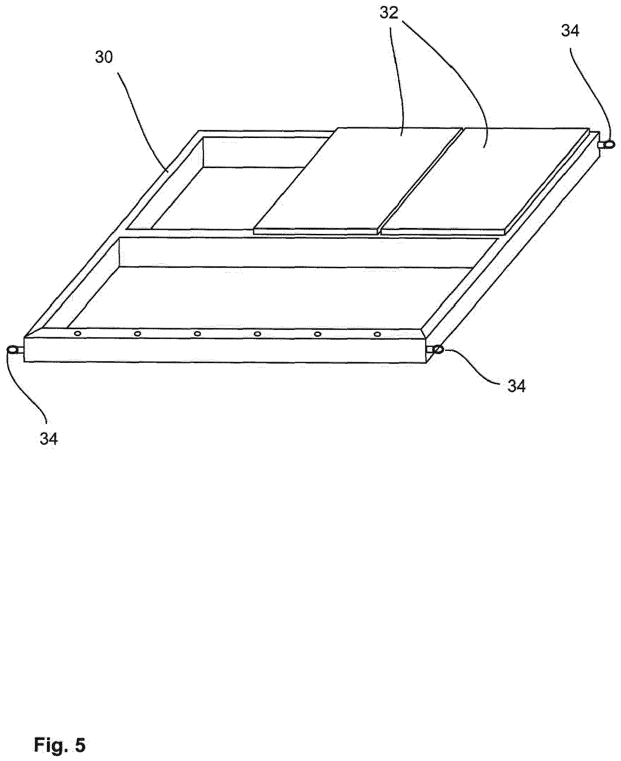

Weiterhin können die Solarmodule oder Deckenelemente 32, wie in Fig. 5 gezeigt, auf Hilfsrahmen 30 angeordnet sein, wobei beispielsweise drei oder mehr Module parallel nebeneinander liegend auf einem Hilfsrahmen 30 befestigt sind. Die Hilfsrahmen mit den Solarmodulen oder Deckenelementen 32 sind bevorzugt über Befestigungsmittel 34 gelenkig mit den Druckstäben 12 der Tragwerke 2 verbunden, die, wie in Fig. 6 angedeutet, Ösen und/oder Ketten und/oder Seile umfassen können, über die die Hilfsrahmen 30 gelenkig an den oberen Enden der Druckstäbe 12 aufgenommen sind. Ebenso ist eine kardanische Aufnahme denkbar.

Die in Fig. 8 gezeigte erfindungsgemäße Tragkonstruktion 1 wird bevorzugt zur Bildung eines in Fig. 9 gezeigten Solardachs mit einer Vielzahl von Solarmodulen 32 verwendet, die z.B. in einer Höhe von 4 oder mehr Metern über einer Fläche angeordnet sind, welche z.B. als Parkplatz oder als Lagerplatz oder auch als landwirtschaftlich bewirtschaftetet Fläche genutzt wird. Um im letzteren Falle die Pflanzen zusätzlich Sonnenlicht zu versorgen, können anstelle der Solarmodule Deckenelementen 32 in regelmäßigen Abständen auf den Hilfsrahmen 30 montiert werden, welche aus für Sonnenlicht durchlässigem Kunststoff oder Glas bestehen. Alternativ kann es vorgesehen sein, dass einige der mit Solarmodulen belegten Plätze auf den Hilfsrahmen 30 freigelassen werden, d.h. unbedeckt bleiben, um insbesondere bei großen Tragkonstruktionen von mehreren 100 m Länge auch im Zentrum eine ausreichende Belüftung zu gewährleisten.

### Liste der Bezugszeichen

- 1: Tragkonstruktion
- 2: Tragwerk
- 4: Tragmast
- 4i: Innenliegender Tragmast
- 4a: Außenliegender Tragmast
- 6: Tragseil
- 8: Vorspannseil
- 10o: Oberes Positionierseil
- 10u: Unteres Positionierseil
- 12: Druckstab
- 14: Befestigungselement
- 14a: Seilrollen
- 14b: Gleitelemente
- 16: Distanzstange
- 17: laterale Positionierseile
- 18: Querseil
- 20: Verankerungsmittel
- 22o: Oberer Mastteil
- 22u: Unterer Mastteil
- 24: Umlenkrolle Seilrolle
- 26: Spanngewicht
- 26a: Gewicht/Aktuator
- 30: Hilfsrahmen
- 32: Solarmodul
- 34: Befestigungsmittel

## Patentansprüche

1. Tragkonstruktion (1) zum Tragen einer Vielzahl von Solarmodulen oder Deckenelementen (32), umfassend mindestens zwei Tragwerke (2) mit Tragmasten (4, 4a, 4i) die jeweils über ein Tragseil (6) miteinander verbunden sind, an dem sich die Solarmodule oder Deckenelemente (32) über vertikale, mit dem Tragseil (6) über Befestigungselemente (14) verbundene Druckstäbe (12) abstützen, welche über wenigstens ein Vorspannseil (8) mit einer Vorspannkraft beaufschlagt werden, die die Druckstäbe (12) in Abwärtsrichtung auf das mit diesen verbundene Tragseil (6) zu drängt,
**dadurch gekennzeichnet,**
**dass** die Befestigungselemente Seilrollen (14a) oder Gleitelemente (14b) umfassen, über die die Druckstäbe (12) verschieblich mit den Tragseilen (6) und Vorspannseilen (8) gekoppelt sind, und dass die Druckstäbe (12) zur Vermeidung einer horizontalen Bewegung über Positionierseile (10) in horizontaler Richtung unverschieblich mit den Tragmasten (4, 4a, 4i) gekoppelt sind.

2. Tragkonstruktion nach Anspruch 1,
**dadurch gekennzeichnet, dass** die Gleitelemente (14b) die Tragseile (6) und/oder Vorspannseile (8) umgreifende Gleitschuhe (14b) oder Ösen umfassen.

3. Tragkonstruktion nach Anspruch 1 oder 2,
**dadurch gekennzeichnet,**
**dass** die Befestigungselemente (14) an den Druckstäben (12) in unterschiedlichen Höhen positionierbar sind, und/oder dass die Druckstäbe (12) in ihrer Länge veränderbar sind.

4. Tragkonstruktion nach einem der vorhergehenden Ansprüche,
**dadurch gekennzeichnet,**
**dass** die Vorspannseile (8) und/oder die Tragseile (6) jeweils zwei oder mehr, insbesondere über Schäkel miteinander verbundene Seilabschnitte umfassen.

5. Tragkonstruktion nach einem der vorhergehenden Ansprüche,
**dadurch gekennzeichnet,**
**dass** die Tragseile (6) und/oder die Vorspannseile (8) Mehrfachseile, insbesondere Doppelseile sind, die jeweils zwei oder mehr parallel zueinander verlaufende Einzelseile umfassen.

6. Tragkonstruktion nach einem der vorhergehenden Ansprüche,
**dadurch gekennzeichnet,**
**dass** die Tragseile (6) zweier Tragwerke (2) in Längsrichtung der Tragkonstruktion (1) betrachtet parallel zueinander verlaufen, und dass die Druckstäbe (12) der Tragwerke (2) in Querrichtung der Tragkonstruktion (1) betrachtet über Distanzstangen (16) in einem festen Abstand zueinander angeordnet und/oder durch Querseile (18) miteinander verspannt sind.

7. Tragkonstruktion nach einem der vorhergehenden Ansprüche,
**dadurch gekennzeichnet,**
**dass** die Tragkonstruktion (1) eine Vielzahl von Tragwerken (2) umfasst, und dass die innenliegenden Tragmasten (4i) der Vielzahl von Tragwerken (2) einen ersten unteren Mastteil (22u) und einen zweiten oberen Mastteil (22o) aufweisen, wobei am Ende des ersten unteren Mastteils (22u) der zweite obere Mastteil (22o) mit seiner Unterseite in horizontaler Richtung beweglich aufgenommen ist.

8. Tragkonstruktion nach Anspruch 7,
**dadurch gekennzeichnet,**
**dass** die Tragseile (6) und/oder Vorspannseile (8) zweier benachbarter Tragwerke als ein zusammenhängendes Tragseil (6) oder Vorspannseil (8) ausgeführt sind, welches zwischen den Tragwerken (2) bevorzugt über eine gemeinsame Seilrolle (24) geführt ist, die zur Veränderung der Zugspannung über Spannmittel, insbesondere ein Spanngewicht (26) und/oder einen motorisch betätigten Aktuator (26a), mit einer Vorspannkraft beaufschlagbar ist.

9. Tragkonstruktion nach einem der vorhergehenden Ansprüche,
**dadurch gekennzeichnet,**
**dass** die Solarmodule oder Deckenelemente (32) auf Hilfsrahmen (30) angeordnet sind, welche über Befestigungsmittel (34) gelenkig mit den Druckstäben (12) der Tragwerke (2) verbunden sind.

10. Tragkonstruktion nach Anspruch 9,
**dadurch gekennzeichnet,**
**dass** die Befestigungsmittel (34) Ösen und/oder Ketten und/oder Seile umfassen, über die die Hilfsrahmen (30) an den Druckstäben (12) befestigbar sind.

11. Solardach mit einer Vielzahl an Solarmodulen (32), die an einer eine Fläche in einem Abstand überspannenden Tragkonstruktion (1) aufgenommen sind,
**dadurch gekennzeichnet,**
**dass** die Tragkonstruktion (1) nach einem der vorhergehenden Ansprüche ausgebildet ist.

## Claims

1. Supporting structure (1) for supporting a plurality of solar modules or ceiling elements (32), comprising at least two supporting frameworks (2) with supporting masts (4, 4a, 4i) which are respectively connected to one another by means of a supporting cable (6), on which supporting cable the solar modules or ceiling elements (32) are supported by means of vertical compression bars (12) which are connected to the supporting cable (6) by means of fastening elements (14), and which are subjected to a pretensioning force by means of at least one pretensioning cable (8), which pretensioning force pushes the compression bars (12) in the downward direction toward the supporting cable (6) which is connected to said compression bars,
**characterized**
**in that** the fastening elements comprise cable pulleys (14a) or sliding elements (14b), by means of which the compression bars (12) are displaceably coupled to the supporting cables (6) and pretensioning cables (8), and in that the compression bars (12) are coupled to the supporting masts (4, 4a, 4i) non-displaceably in the horizontal direction by means of positioning cables (10) in order to avoid a horizontal movement.

2. Supporting structure according to Claim 1,
**characterized**
**in that** the sliding elements (14b) comprise sliding shoes (14b) or eyes which encompass the supporting cables (6) and/or pretensioning cables (8).

3. Supporting structure according to Claim 1 or 2,
**characterized**
**in that** the fastening elements (14) can be positioned at different heights on the compression bars (12), and/or in that the compression bars (12) can be changed in terms of their length.

4. Supporting structure according to one of the preceding claims,
**characterized**
**in that** the pretensioning cables (8) and/or the supporting cables (6) in each case comprise two or more cable sections which are connected together in particular by means of shackles.

5. Supporting structure according to one of the preceding claims,
**characterized**
**in that** the supporting cables (6) and/or the pretensioning cables (8) are multi-cables, in particular double cables, which in each case comprise two or more individual cables running in parallel to one another.

6. Supporting structure according to one of the preceding claims,
**characterized**
**in that** the supporting cables (6) of two supporting frameworks (2) run in parallel to one another, when viewed in the longitudinal direction of the supporting structure (1), and in that the compression bars (12) of the supporting frameworks (2), when viewed in the transverse direction of the supporting structure (1), are arranged by means of spacer rods (16) at a fixed distance from one another and/or braced together by transverse cables (18).

7. Supporting structure according to one of the preceding claims,
**characterized**
**in that** the supporting structure (1) comprises a plurality of supporting frameworks (2), and in that the inner supporting masts (4i) of the plurality of supporting frameworks (2) have a first lower mast part (22u) and a second upper mast part (22o), wherein the second upper mast part (22o) is received with its lower face at the end of the first lower mast part (22u) so as to be movable in the horizontal direction.

8. Supporting structure according to Claim 7,
**characterized**
**in that** the supporting cables (6) and/or pretensioning cables (8) of two adjacent supporting frameworks are designed as a continuous supporting cable (6) or pretensioning cable (8) which is guided between the supporting frameworks (2), preferably by means of a common cable pulley (24), which in order to change the tensile stress can be subjected to a pretensioning force by means of tensioning means, in particular a tensioning weight (26) and/or a motor-operated actuator (26a).

9. Supporting structure according to one of the preceding claims,
**characterized**
**in that** the solar modules or ceiling elements (32) are arranged on auxiliary frames (30) which are connected in an articulated manner to the compression bars (12) of the supporting frameworks (2) by means of fastening means (34).

10. Supporting structure according to Claim 9,
**characterized**
**in that** the fastening means (34) comprise eyes and/or chains and/or cables, the auxiliary frames (30) being able to be fastened thereby to the compression bars (12).

11. Solar roof having a plurality of solar modules (32) which are received on a supporting structure (1) spanning an area at a distance,
**characterized**
**in that** the supporting structure (1) is configured according to one of the preceding claims.

## Revendications

1. Construction porteuse (1) pour porter une pluralité de modules solaires ou d'éléments de plafond (32), comprenant au moins deux structures porteuses (2) avec des mâts porteurs (4, 4a, 4i) qui sont respectivement reliés entre eux par le biais d'un câble porteur (6) sur lequel les modules solaires ou les éléments de plafond (32) s'appuient par le biais de barres de pression verticales (12) reliées au câble porteur (6) par le biais d'éléments de fixation (14), lesquelles sont soumises à une force de précontrainte par le biais d'au moins un câble de précontrainte (8), qui pousse les barres de pression (12) dans la direction du bas vers le câble porteur (6) relié à celles-ci,
**caractérisé en ce que**
les éléments de fixation comprennent des poulies (14a) ou des éléments coulissants (14b), par le biais desquels les barres de pression (12) sont couplées de manière coulissante aux câbles porteurs (6) et aux câbles de précontrainte (8), et **en ce que** les barres de pression (12) sont couplées de manière immobile aux mâts porteurs (4, 4a, 4i) pour éviter un mouvement horizontal par le biais de câbles de positionnement (10) dans la direction horizontale.

2. Construction porteuse selon la revendication 1, **caractérisée en ce que** les éléments coulissants (14b) comprennent des patins (14b) ou des oeillets entourant les câbles porteurs (6) et/ou les câbles de précontrainte (8).

3. Construction porteuse selon la revendication 1 ou 2, **caractérisée en ce que** les éléments de fixation (14) peuvent être positionnés à différentes hauteurs sur les barres de pression (12) et/ou **en ce que** la longueur des barres de pression (12) peut être modifiée.

4. Construction porteuse selon l'une quelconque des revendications précédentes, **caractérisée en ce que** les câbles de précontrainte (8) et/ou les câbles porteurs (6) comprennent respectivement deux ou plus de deux sections de câble reliées entre elles, notamment par le biais de manilles.

5. Construction porteuse selon l'une quelconque des revendications précédentes, **caractérisée en ce que** les câbles porteurs (6) et/ou les câbles de précontrainte (8) sont des câbles multiples, notamment des câbles doubles, comprenant chacun deux ou plus de deux câbles individuels parallèles entre eux.

6. Construction porteuse selon l'une quelconque des revendications précédentes, **caractérisée en ce que** les câbles porteurs (6) de deux structures porteuses (2) sont parallèles entre eux dans la direction longitudinale de la construction porteuse (1), et **en ce que** les barres de pression (12) des structures porteuses (2) sont agencées à une distance fixe les unes des autres dans la direction transversale de la construction porteuse (1) par le biais de tiges d'écartement (16) et/ou sont serrées entre elles par des câbles transversaux (18).

7. Construction porteuse selon l'une quelconque des revendications précédentes, **caractérisée en ce que** la construction porteuse (1) comprend une pluralité de structures porteuses (2), et **en ce que** les mâts porteurs intérieurs (4i) de la pluralité de structures porteuses (2) présentent une première partie de mât inférieure (22u) et une deuxième partie de mât supérieure (22o), la deuxième partie de mât supérieure (22o) étant reçue à l'extrémité de la première partie de mât inférieure (22u) avec son côté inférieur mobile dans la direction horizontale.

8. Construction porteuse selon la revendication 7, **caractérisée en ce que** les câbles porteurs (6) et/ou les câbles de précontrainte (8) de deux structures porteuses voisines sont réalisés sous la forme d'un câble porteur (6) ou d'un câble de précontrainte (8) d'un seul tenant, qui est guidé entre les structures porteuses (2) de préférence par le biais d'une poulie commune (24) qui, pour modifier la tension, peut être soumise à une force de précontrainte par le biais de moyens de tension, notamment un poids de tension (26) et/ou un actionneur (26a) actionné par moteur.

9. Construction porteuse selon l'une quelconque des revendications précédentes, **caractérisée en ce que** les modules solaires ou les éléments de plafond (32) sont agencés sur des cadres auxiliaires (30) qui sont reliés de manière articulée aux barres de pression (12) des structures porteuses (2) par le biais de moyens de fixation (34).

10. Construction porteuse selon la revendication 9, **caractérisée en ce que** les moyens de fixation (34) comprennent des oeillets et/ou des chaînes et/ou des câbles par le biais desquels les cadres auxiliaires (30) peuvent être fixés aux barres de pression (12).

11. Toit solaire avec une pluralité de modules solaires (32), qui sont reçus sur une construction porteuse (1) couvrant une surface à distance,
**caractérisé en ce que**
la construction porteuse (1) est réalisée selon l'une quelconque des revendications précédentes.
